# EUROPÄISCHE PATENTSCHRIFT

(11) **EP 0 847 352 B1**
(45) Veröffentlichungstag und Bekanntmachung des Hinweises auf die Patenterteilung: **13.03.2002**
(21) Anmeldenummer: 96929248.1
(22) Anmeldetag: 13.08.1996
(51) Int. Cl.: B60T 8/40, B60T 8/42, B60T 8/48

(54) **HYDRAULISCHE KRAFTFAHRZEUGBREMSANLAGE MIT VORLADEPUMPE**
HYDRAULIC BRAKE SYSTEM WITH A PRIMING PUMP FOR MOTOR VEHICLES
SYSTEME DE FREINAGE HYDRAULIQUE POUR AUTOMOBILES, A POMPE D'AMOR AGE

(30) Priorität: 02.09.1995 DE 19532469; 17.01.1996 DE 19601418
(43) Veröffentlichungstag der Anmeldung: 17.06.1998
(73) Patentinhaber: Continental Teves AG & Co. oHG, 60488 Frankfurt (DE)
(72) Erfinder: STEFFES, Helmut, D-65795 Hattersheim (DE); DEHIO, Gottfried, D-63450 Hanau (DE); VOLZ, Peter, D-64291 Darmstadt (DE)
(86) Internationale Anmeldenummer: EP9603571
(87) Internationale Veröffentlichungsnummer: WO9709213

(56) Entgegenhaltungen:
- DE-A- 3 824 877
- DE-A- 3 839 178
- DE-A- 4 037 468

## Beschreibung

Die vorliegende Erfindung geht aus von einer hydraulischen Kraftfahrzeugbremsanlage gemäß dem Oberbegriff des Anspruchs 1. Eine solche Kraftfahrzeugbremsanlage ist zum Beispiel aus der DE-A-4 037 468 bekannt. Derartige Konzepte werden häufig verwendet, wenn Bremsanlagen, die zur Blockierschutzregelung nach dem Rückförderprinzip arbeiten, zusätzlich mit einer Einrichtung zur automatischen Bremsung ausgerüstet werden sollen. Als automatische Bremsung ist zu betrachten einerseits eine Antriebsschlupfregelung, bei welcher ein Bremseneingriff nur bei den Radbremsen der angetriebenen Räder vorgenommen wird, oder andererseits auch eine Regelung des Giermomentes des Fahrzeugs durch Bremseneingriff an einzelnen Fahrzeugrädern. Schließlich ist noch als automatische Bremsung zu verstehen, wenn das Fahrzeug aus bestimmten Gründen verlangsamt werden soll, beispielsweise wenn ein Sensor ein Warnsignal gibt, daß der Abstand zu einem vorausfahrenden Fahrzeug zu gering ist und dergleichen.

Bei Bremsanlagen, die also zur Blockierschutzreqelung nach dem Rückförderprinzip arbeiten, wird häufig die verwendete Rückförderpumpe selbstansaugend ausgelegt, um für eine automatische Bremsung selbsttätig Druckmittel aus dem Druckmittelvorratsbehälter ansaugen zu können. Bei Kälte jedoch hat das verwendete Druckmittel, nämlich Bremsflüssigkeit, eine hohe Viskosität, so daß die Rückförderpumpe erhebliche Schwierigkeiten hat, die erforderliche Saugleistung zu erbringen.

Beispielsweise treten beim Ansaugen über die Bremsleitung und dem Hauptzylinder aus dem Vorratsbehälter starke Drosseleffekte durch den Hauptzylinder auf. Zusätzlich bringen lange Rohrleitungen und Verbohrungen ein Druckgefälle mit sich.

Es ist daher vielfach vorgeschlagen worden, eine Vorladepumpe zu verwenden. Zum Teil sind in solchen Bremsanlagen dann die Rückförderpumpen nicht selbstansaugend, zum Teil jedoch wirkt die Vorladepumpe lediglich unterstützend, wobei die Rückförderpumpe weiterhin selbstansaugend ausgelegt ist.

Zum Anschluß der Druckseite der Vorladepumpe an die Saugseite der Rückförderpumpe gibt es unterschiedliche Vorschläge. Es muß auf jeden Fall sichergestellt sein, daß der von der Vorladepumpe erzeugte Vordruck auf jeden Fall zur Saugseite der Rückförderpumpe gelangt und nicht etwa in einen drucklosen Behälter abfließt. Außerdem muß ein Restdruckabbau gesichert sein, wenn die Pumpen ausgeschaltet werden. Es stellt sich immer wieder das Problem, daß die Vorladepumpe auch nach Abschalten noch nachläuft, so daß zusätzliche Ventile erforderlich sind, die zum Abbau des entstehenden Restdruckes geöffnet werden.

Die Aufgabe der vorliegenden Erfindung besteht darin, eine Bremsanlage der eingangs genannten Art zu schaffen, deren Vorladekonzept einfach und preiswert ist, aber wirkungsvoll arbeitet.

Diese Aufgabe wird gelöst in Verbindung mit den kennzeichnenden Merkmalen des Anspruchs 1. Durch eine derartige Anordnung der Druckleitung, die unmittelbar vor oder erst in der hydraulischen Steuereinheit in die Bremsleitung einmündet, sind keinerlei Ventile zum Restdruckabbau notwendig. Schließlich ist ja die Druckseite der Vorladepumpe über die Bremsleitung bei unbetätigtem Hauptzylinder permanent an den Vorratsbehälter angeschlossen. Andererseits ist die Rohrverbindung vom Hauptzylinder zur hydraulischen Steuereinheit so lang, daß diese Leitung allein schon ausreicht, den Druckmittelstrom von der Druckseite der Vorladepumpe derart zu drosseln, daß der allergrößte Teil zur Saugseite der Rückförderpumpe gelangt.

Ein Trennventil in der Bremsleitung, welches einen Druckmittelstrom zum Hauptzylinder hin unterbindet, ist also lediglich zwischen der Druckseite der Rückförderpumpe und dem Hauptzylinder erforderlich. Die Druckleitung der Vorladepumpe kann also in die Bremsleitung einmünden zwischen dem Trennventil und dem Hauptzylinder.

Um auch in diesem Falle den Restdruck bei Nachlauf der Vorladepumpe von der Rückförderpumpe fernzuhalten, reicht es aus, ein bei selbstansaugenden Rückförderpumpen übliches elektrisches Umschaltventil an der Saugseite der Rückförderpumpe zu verwenden.

Besonders preiswert wird eine derartige Bremsanlage, wenn für beide Bremskreise eine gemeinsame Vorladepumpe verwendet wird, wobei zur Kreistrennung je ein Rückschlagventil in den zu den Bremskreisen führenden Druckzweigen angeordnet ist.

Wenn dagegen die Vorladepumpe zweikreisig ausgeführt wird, also die Bremskreise von separaten Druckleitungen vorgeladen werden, bringt das einen Sicherheitsgewinn: Bei Ausfall eines Rückschlagventils in einer der Druckleitungen fließt das im zugehörigen Bremskreis befindliche Druckmittel in den drucklosen Vorratsbehälter ab und nicht in den anderen Bremskreis. Somit ist auch bei einem defekten Rückschlagventil stets eine Kreistrennung gegeben. Bei dieser Pumpenausführung ist eine elektronische Überwachungseinheit in der Lage, ein defektes Rückschlagventil schnell zu erkennen, so daß schleichende Fehler ausgeschlossen sind.

Eine nähere Erläuterung des Erfindungsgedankens erfolgt nun durch die Beschreibung bevorzugter Ausführungsbeispiele anhand von vier Figuren.

Es zeigt
- Fig. 1: eine Prinzipskizze zur Erfindungsidee mit einkreisiger Vorladepumpe,
- Fig. 2: ein Ausführungsbeispiel für eine erfindungsgemäße Bremsanlage gemäß Fig. 1,
- Fig. 3: eine Prinzipskizze zur Erfindungsidee mit zweikreisiger Vorladepumpe,
- Fig. 4: ein Ausführungsbeispiel für eine erfindungsgemäße Bremsanlage gemäß Fig. 3.

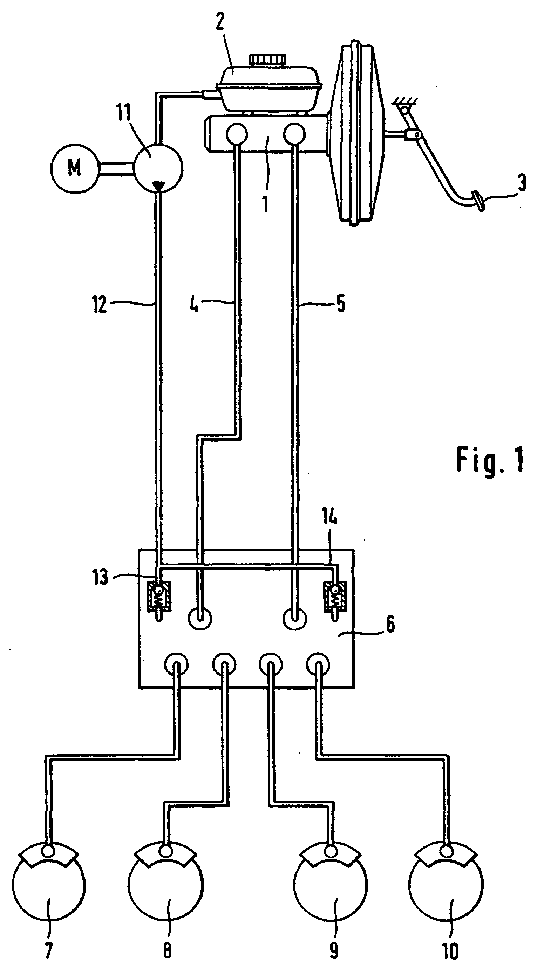

In Fig. 1 sind nur wenige Funktionselemente dargestellt, die zum Verständnis des Erfindungsgedankens beitragen. Ein Hauptzylinder 1 ist an einen Vorratsbehälter 2 angeschlossen und durch ein Bremspedal 3 betätigbar. Vom Hauptzylinder 1 gehen zwei Bremsleitungen 4 und 5 aus. Sie führen zu einer hydraulischen Steuereinheit 6, an welche vier Radbremsen 7 bis 10 angeschlossen sind. Eine Vorladepumpe 11 ist mit ihrer Saugseite an den Vorratsbehälter 2 angeschlossen und besitzt eine Druckleitung 12 zur hydraulischen Steuereinheit 6. Diese Druckleitung 12 teilt sich auf in je eine Druckleitung 13 und 14 pro Bremskreis, also pro Bremsleitung 4 bzw. 5. Die hydraulische Steuereinheit 6 enthält pro Radbremse je ein Einlaß- und ein Auslaßventil, und jeweils eine Rückförderpumpe, einen Niederdruckspeicher und Dämpfungselemente, je ein Trennventil und je ein Umschaltventil an der Saugseite der Rückförderpumpe pro Bremskreis. Die Einmündung der beiden Druckleitungen 13 und 14 in die jeweilige Bremsleitung 4 bzw. 5 liegt so weit vom Hauptzylinder 1 entfernt, nämlich innerhalb der hydraulischen Steuereinheit 6, daß die Rohrverbindung, welche jeweils die Bremsleitung 4 bzw. 5 bildet, derart drosselnd wirkt, daß sich der von der Vorladepumpe 11 erzeugte Vordruck nicht bis zum Hauptzylinder 1 fortpflanzen kann. Die Bremsleitungen 4 und 5 benötigen daher weder zusätzliche Blenden oder Drosseln noch irgendwelche Ventile, die für einen Staudruck in den Bremsleitungen sorgen.

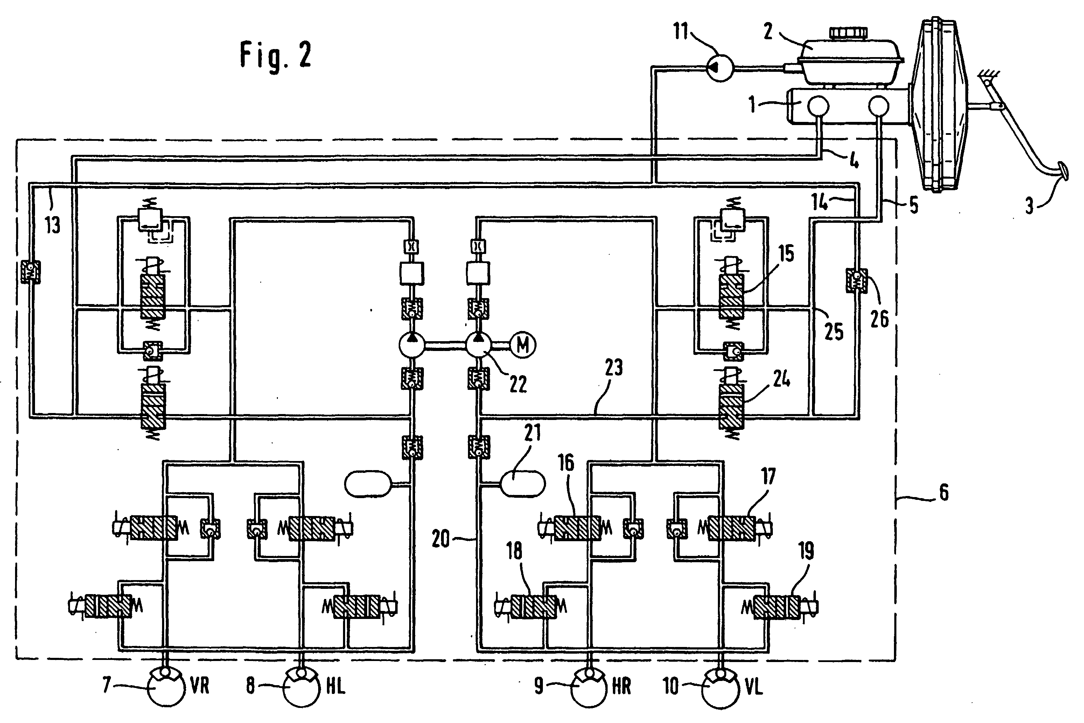

Während Fig. 1 etwa die räumlichen Verhältnisse darstellt, sind in Fig. 2 die hydraulischen Leitungsverbindungen auch innerhalb der hydraulischen Steuereinheit dargestellt. Hier allerdings, in Fig. 2, sind aus Gründen der Übersichtlichkeit die Proportionen der einzelnen Leitungslängen zueinander nicht eingehalten.

Der Hauptzylinder 1, der Vorratsbehälter 2, das Bremspedal 3, die Bremsleitungen 4 und 5, die Vorladepumpe 11, die Druckleitungen 13 und 14 sowie die Radbremsen 7,8,9 und 10 entsprechen den mit gleichen Bezugszeichen belegten Elementen aus Fig. 1. Die in der hydraulischen Steuereinheit 6 enthaltenen Funktionselemente sind gestrichelt umrandet. In einer realen Bremsanlage ist der Abstand vom Hauptzylinder 1 zur hydraulischen Steuereinheit 6 wesentlich länger als in dieser Darstellung.

Innerhalb der hydraulischen Steuereinheit 6 sind die beiden Bremskreise völlig identisch aufgebaut. Im folgenden wird daher nur der von der Bremsleitung 5 versorgte Bremskreis beschrieben.

Die Bremsleitung 5 verläuft über ein Trennventil 15 zu den Einlaßventilen 16 und 17 der Radbremsen 9 und 10. Über die den Radbremsen 9 und 10 zugeordneten Auslaßventile 18 und 19 ist eine Rücklaufleitung 20 an die Radbremsen 9 und 10 angeschlossen. Die Rücklaufleitung 20 führt zu einem Niederdruckspeicher 21, welcher mit der Saugseite der Rückförderpumpe 22 verbunden ist. An die Verbindung zwischen dem Niederdruckspeicher 21 und der Rückförderpumpe 22 knüpft eine Saugleitung 23 an, welche über ein Umschaltventil 24 zur Bremsleitung 5 zwischen Hauptzylinder 1 und Trennventil 15 führt. An diese Saugleitung 23 ist zwischen der Anknüpfungsstelle 25 an die Bremsleitung 5 und dem Trennventil 24 die Druckleitung 14 angeschlossen. In der Druckleitung 14 befindet sich ein Rückschlagventil 26, welches verhindert, daß zwischen den beiden Bremsleitungen 4 und 5 ein Druckmittelaustausch stattfindet, da die Druckleitung 13 zusammen mit der Druckleitung 14 von der Vorladepumpe 11 gespeist wird und völlig analog an die Bremsleitung 4 anschließt. Die Druckseite der Rückförderpumpe 22 ist auf bekannte Weise an die Bremsleitung 5 zwischen dem Trennventil 15 und den Einlaßventilen 16 und 17 angeschlossen. Das Umschaltventil 24 ist ein stromlos geschlossenes 2/2-Wegemagnetventil. Es bewirkt, daß in unbestromter Stellung des Umschaltventils die Saugseite der Rückförderpumpe 22 zwar von der Bremsleitung 5 abgetrennt ist, nicht jedoch die Druckseite der Vorladepumpe 11. Über die Druckleitung 14, den Anknüpfungspunkt 25 und die Bremsleitung 5 kann bei unbetätigtem Hauptzylinder - wenn auch nur allmählich - das von der Vorladepumpe nach Abschalten einer automatischen Bremsung zuviel geförderte Volumen in den Hauptzylinder 1 und somit in den Vorratsbehälter 2 abfließen. Dabei kann durch das Umschaltventil 24 ein weiterer Druckaufbau an der Saugseite der Rückförderpumpe 22 unterbunden werden.

Da bei einer automatischen Bremsung das Umschaltventil 24 geöffnet und das Trennventil 15 geschlossen ist, ist einerseits sichergestellt, daß die Rückförderpumpe 22 ihren hohen Förderdruck zu den Einlaßventilen fördert und nicht in die Bremsleitung 5. Andererseits ist durch die sehr lange Bremsleitung 5 und die demgegenüber sehr kurze Verbindung zur Saugseite der Rückförderpumpe 22 sichergestellt, daß bei einer automatischen Bremsung ein ausreichender Vordruck für die Rückförderpumpe 22 zur Verfügung steht.

Ein derartiges Vorladekonzept hat erhebliche Vorteile. Beispielsweise entfällt an der Vorladepumpe ein Mittel zur Druckbegrenzung wie beispielsweise ein Druckbegrenzungsventil oder aber eine Blende. Eine Blende dient beim Stand der Technik außerdem zum Restdruckabbau, der in diesem Falle ja durch die Bremsleitung 5 erfolgt, die keine zusätzlichen Drosselelemente benötigt. Der Hauptzylinder und der Vorratsbehälter können dem üblichen Standard entsprechen. Der durch den Nachlauf der Vorladepumpe 11 erzeugte Restdruck kann durch Schließen des Umschaltventils 24 von der Rückförderpumpe 22 ferngehalten werden und baut sich über die Bremsleitung ab. Durch den im Vergleich zur langen Bremsleitung kurzen Weg zur Saugseite der Rückförderpumpe steigt die erforderliche Leistung der Vorladepumpe nur geringfügig an gegenüber einer solchen Vorladepumpe, deren Druckseite völlig vom Hauptzylinder abgeschnitten ist.

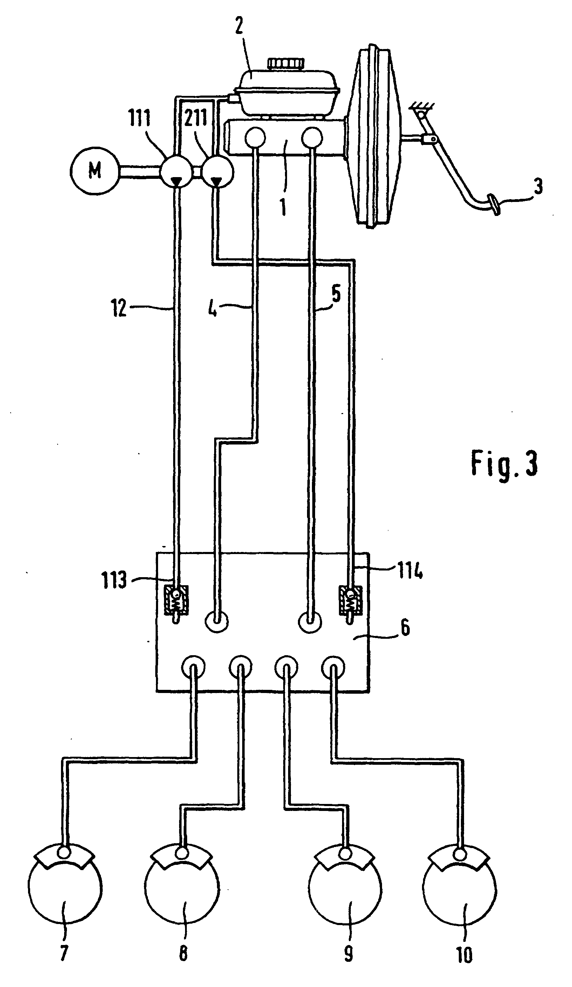

Fig. 3 zeigt analog zu Fig. 1 eine Prinzipskizze, allerdings mit zweikreisiger Vorladepumpe 111/211, welche von einem gemeinsamen Motor M angetrieben wird. Funktionselemente, die mit denen aus Fig. 1 identisch sind, tragen dieselben Bezugszeichen. Durch die langen Bremsleitungen 4 und 5 ergeben sich dieselben Vorteile wie in Fig. 1.

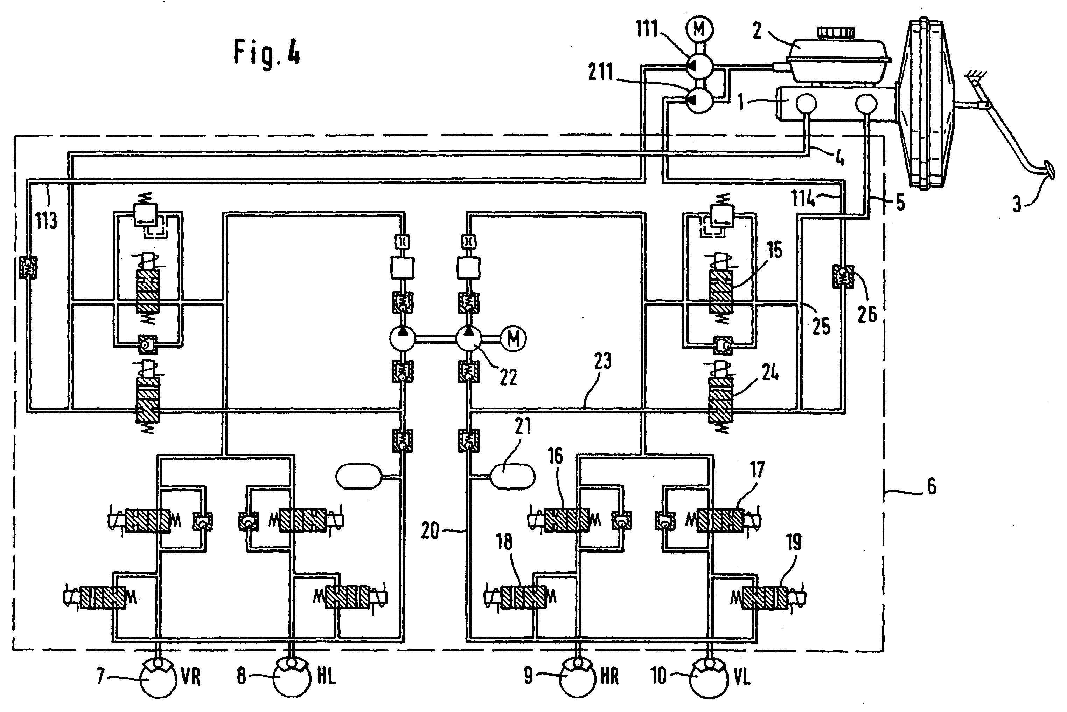

Anhand von Fig. 4, die in ihrer Darstellungsweise Fig. 2 entspricht, läßt sich außerdem erkennen, daß die Druckleitungen 113 und 114 nicht miteineander in Berührung kommen. Daher ist auch bei Defekt eines der in den Druckleitungen angeordneten Rückschlagventile eine Vermischung der zwei Bremskreise ausgeschlossen. Das beispielsweise über ein defektes Rückschlagventil 26 entweichende Druckmittel fließt über den diese Druckleitung ladenden Teil 211 der zweikreisigen Vorladenpumpe in den Vorratsbehälter 2 ab. Da ein solcher Defekt leicht erkannt werden kann, sind schleichende Fehler ausgeschlossen.Die übrigen Funktionselemente entsprechen denen aus Fig. 2.

## Patentansprüche

1. Hydraulische Kraftfahrzeug-Bremsanlage mit einem pedalbetätigen, an einem Vorratsbehälter (2) angeschlossenen Hauptzylinder (1), mit mindestens einem Bremskreis, an welchen mindestens eine Radbremse (9) mittels einer Bremsleitung (5) an den Hauptzylinder angeschlossen ist, mit einer Rückförderpumpe (22) pro Bremskreis, welche bei einer Blockierschutzregelung das aus den Radbremsen (9,10) abgelassene Druckmittel in die Bremsleitung (5) zurückfördert, sowie mit einer Vorladepumpe (11), welche bei einer automatischen Bremsung an der Saugseite der Rückförderpumpe (22) einen Vordruck erzeugt, wobei die Druckseite der Vorladepumpe (11) eine Druckleitung (14) besitzt, die mit dem Hauptzylinder (1) in Strömungsverbindung steht, **dadurch gekennzeichnet, daß** die Druckleitung (14) der Vorladepumpe (11) aber soweit vom Hauptzylinder (1) entfernt in die Bremsleitung (5) mündet, daß durch die in der Bremsleitung (5) zwischen Einmündung der Druckleitung (14) und dem Hauptzylinder (1) auftretenden Drosseleffekte ein ausreichender Vordruck für die Rückförderpumpe (22) entsteht.

2. Bremsanlage nach Anspruch 1, **dadurch gekennzeichnet, daß** eine hydraulische Regeleinheit (6), die unter anderem den Radbremsen (9,10) zugeordnete Einlaß- und Auslaßventile (16,17,18,19) und die Rückförderpumpe (22) aufnimmt, auch die Einmündung der Druckleitung (14) in die Bremsleitung (5) enthält.

3. Bremsanlage nach Anspruch 1, **dadurch gekennzeichnet, daß** die Einmündung der Druckleitung 14 zwischen dem Hauptzylinder (1) und einem zwischen Druckseite der Rückförderpumpe (22) und Hauptzylinder (1) angeordneten Trennventil (15) liegt, wobei eine Saugleitung (23) der Rückförderpumpe von der Druckleitung (14) zur Saugseite der Rückförderpumpe (22) geführt ist.

4. Bremsanlage nach Anspruch 3, **dadurch gekennzeichnet, daß** die Saugleitung (23) ein 2-2-Wegeumschaltventil (24) aufweist.

5. Bremsanlage nach einem der vorhergehenden Ansprüche, **dadurch gekennzeichnet, daß** zwei Bremskreise vorhanden sind und die Druckleitung einer den Bremskreisen gemeinsame Vorladepumpe (11) sich in zwei Druckleitungen (13,14), je eine pro Bremskreis, aufteilt.

## Claims

1. Hydraulic automotive vehicle brake system including a pedal-operated master cylinder (1) connected to a supply reservoir (2), at least one brake circuit wherein at least one wheel brake (9) is connected to the master cylinder by way of a brake line (5), a return pump (22) for each brake circuit which returns the pressure fluid discharged from the wheel brakes (9, 10) in an anti-lock control operation into the brake line (5), as well as a precharging pump (11) which generates a pilot pressure on the suction side of the return pump (22) during automatic braking operations, wherein the pressure side of the precharging pump (11) includes a pressure line (14) which has a flow connection to the master cylinder (1),
**characterized in that** the pressure line (14) of the precharging pump (11) opens into the brake line (5) so remote from the master cylinder (1) that a sufficient pilot pressure for the return pump (22) develops due to the throttling effects which are caused in the brake line (5) between the junction point of the pressure line (14) and the master cylinder (1).

2. Brake system as claimed in claim 1,
**characterized in that** a hydraulic control unit (6) which accommodates, among others, inlet and outlet valves (16, 17, 18, 19) associated with the wheel brakes (9, 10) and the return pump (22) also includes the junction point of the pressure line (14) into the brake line (5).

3. Brake system as claimed in claim 1,
**characterized in that** the junction point of the pressure line (14) is arranged between the master cylinder (1) and a separating valve (15) interposed between the pressure side of the return pump (22) and the master cylinder (1), and a suction line (23) of the return pump extends from the pressure line (14) to the suction side of the return pump (22).

4. Brake system as claimed in claim 3,
**characterized in that** the suction line (23) includes a two-way/two-position change-over valve (24).

5. Brake system as claimed in any one of the preceding claims,
**characterized in that** two brake circuits are provided, and the pressure line of a precharging pump (11) which is common to the brake circuits is subdivided into two pressure lines (13, 14), one for each brake circuit.

## Revendications

1. Mécanisme du frein d'autobile hydraulique comportant un maître-cylindre (1) commandé par pédale et raccordé à un réservoir (2), au moins un circuit-frein, raccordé auquel maître-cylindre est au moins un frein de roue par l'intermédiaire d'une tuyauterie de frein (5), une pompe de refoulement (22) pour chaque circuit-frein retournant au cas d'un contrôle d'anti-blocage le milieu de pression evacué des freins de roue (9,10) à la tuyauterie de frein (5), et comportant une pompe à précharger (11) produisant au cas d'un freinage automatique une pression permanente au côté aspirant de la pompe de refoulement (22), le côté de pression de la pompe à précharger (11) comportant une conduite à pression (14) en communication hydraulique avec le maître-cylindre (1), **caractérisé en ce que** la conduite de pression (14) de la pompe à précharger (11) débouche dans la tuyauterie de frein (5) à une distance du maître-cylindre (1) tellement qu'une pression permanente suffisante pour la pompe à refoulement (22) est produite par les effets d'étrangement se formant dans la tuyauterie de frein (15) entre la bouchure de la conduite de pression (14) et le maître-cylindre.

2. Mécanisme du frein selon la revendication 1, **caractérisé en ce qu'**un ensemble de réglage (6) hydraulique accueillant, entre autres, les soupapes d'admission et d'émission (16, 17, 18, 19) associées aux freins de roue (9,10) et la pompe de refoulement (22), également contient la débouchure de la conduite à pression (14) dans la tuyauterie de frein (5).

3. Mécanisme du frein selon la revendication 1, **caractérisé en ce que** la débouchure de la conduite de pression (14) est prévue entre le maître-cylindre (1) et une soupape de séparation (15) disposé entre le côté à pression de la pompe de refouelment (22) et le maître-cylindre (1), une tuyauterie aspirante (23) de la pompe de refoulement étant guidée de la conduite de pression (14) au côté aspirant de la pompe de refoulement (22).

4. Mécanisme du frein selon la revendication 3, **caractérisé en ce que** la tuyauterie aspirante (23) comporte une soupage (24) à deux voies et à deux position.

5. Mécanisme du frein selon l'une des revendications précédentes, caractérsié en ce que deux circuits de frein sont prévus et que la conduite de pression d'une pompe à précharger (11) commune aux circuits de frein est partagée en deux conduites de pression (13, 14), l'une pour chacque circuit de frein.
